# EUROPÄISCHE PATENTSCHRIFT

(11) **EP 3 174 727 B1**
(45) Veröffentlichungstag und Bekanntmachung des Hinweises auf die Patenterteilung: **30.06.2021**
(21) Anmeldenummer: 15741198.4
(22) Anmeldetag: 23.07.2015
(51) Int. Cl.: G06T 5/00, G06T 5/40, B42D 25/305, B42D 25/328, B42D 25/435, B42D 25/309

(54) **HERSTELLUNG VON SICHERHEITSDOKUMENTEN MIT PORTRAITANSICHTEN**
PRODUCTION OF SECURITY DOCUMENTS HAVING PORTRAIT VIEWS
PRODUCTION DE DOCUMENTS DE SÉCURITÉ AYANT DES VUES DE PORTRAIT

(30) Priorität: 31.07.2014 DE 102014110852
(43) Veröffentlichungstag der Anmeldung: 07.06.2017
(73) Patentinhaber: Bundesdruckerei GmbH, 10969 Berlin (DE)
(72) Erfinder: BAUDACH, Steffen, 13189 Berlin (DE)
(74) Vertreter: Richardt Patentanwälte PartG mbB
(86) Internationale Anmeldenummer: PCT/EP2015/066863
(87) Internationale Veröffentlichungsnummer: WO 2016/016081

(56) Entgegenhaltungen:
- WO-A2-2005/062978
- None

## Beschreibung

### Technisches Gebiet

Die vorliegende Erfindung betrifft die Herstellung von Sicherheitsdokumenten mit jeweils einer individuellen Portraitansicht einer Person in unterschiedlichen Wiedergaben. Weiterhin betrifft die vorliegende Erfindung eine Vorrichtung zur Herstellung von Sicherheitsdokumenten sowie eine maschinenlesbare Darstellung eines Computerprogramms zur Ansteuerung einer Datenverarbeitungsanlage und einer daran angeschlossenen Druckeinrichtung zum Herstellen von Sicherheitsdokumenten mit jeweils einer individuellen Portraitansicht einer Person in unterschiedlichen Wiedergaben.

### Stand der Technik

Bekannte Sicherheitsdokumente sind die amtlichen Personalausweise und Reisepässe. Darin ist die personalisierte Seite, also die Seite mit den klartextlesbaren Angaben zum Inhaber und Aussteller, als Laminat aus transparenten Kunststofffolien und einem bedruckbaren Flächensubstrat ausgeführt. Auf demselben Flächensubstrat ist auch eine Wiedergabe einer fotografischen Portraitansicht des Inhabers in einem dauerhaften Farbdruckverfahren aufgebracht, die in diesem Zusammenhang als Lichtbild bezeichnet wird. Um den mit dem gewählten Einbringungsverfahren erreichbaren Kontrast- und Helligkeitsumfang optimal auszunutzen, werden die typisch von einer außerhalb des Herstellverfahren liegenden Quelle zugeführten digital codierten Darstellungen der Portraitansicht in an sich bekannter Weise umgerechnet, um den für das Einbringungsverfahren angepassten Kontrast- und/oder Helligkeitsumfang zu einzustellen. Dieser Vorgang wird als Tonwertanpassung oder Tonwertskalierung bezeichnet und stellt eine grundlegende Maßnahme in der Aufbereitung digitaler Darstellungen von fotografischen Abbildungen für die Erzeugung einer insbesondere visuell oder taktil wahrnehmbaren Wiedergabe dar. Diese Wiedergabe kann insbesondere auf oberflächlichen oder inneren Schichten eines Sicherheitsdokuments durch ein sog. Einbringungsverfahren angelegt werden. Als Einbringungsverfahren werden dabei insbesondere Druckverfahren, Lasergravur, Photobelichtung und die Erzeugung von Hologrammen verwendet.

Als weitere vorbereitende Maßnahme ist es aus dem Stand der Technik bekannt, die für die Wiedergabe als Lichtbild vorgesehenen Vorlagen unter bestimmten Qualitätskriterien zu beurteilen und bei Vorlagen, die eine vorgegebene Mindestqualität nicht erfüllen, von der Verarbeitung auszuschließen. Verschiedene Möglichkeiten zur Verwirklichung sind der Druckschrift DE 10 2006 005 617 A1 zu entnehmen, deren Inhalt im Wege der Referenz in die vorliegende Offenbarung vollumfänglich einbezogen wird.

Das Dokument WO 2005/062978 A2 beschreibt ein Identifikationsdokument und insbesondere die Bereitstellung optisch variabler personifizierter Daten für Identifikationsdokumente. Ein Identifikationsdokument wird bereitgestellt, das eine Dokumentenschicht und eine erste Markierung umfasst. Die Dokumentenschicht umfasst ein Material, das durch eine thermisch übertragbare optisch variable Tinte bedruckt werden kann. Die erste Markierung wird auf die Dokumentenschicht gedruckt und enthält personalisierte Daten, wobei das Drucken auf die Dokumentenschicht durch eine thermisch übertragene optisch variable Tinte erfolgt. Diese Technologie ermöglicht die Erzeugung eines Halbton-"Spiegelbildes" über einem Farbgeisterbild.

Weiterhin ist aus dem Stand der Technik bekannt, Sicherheitsdokumente mit elektronischen Datenträgern und kryptografischen Einrichtungen auszustatten, wozu exemplarisch auf die Druckschrift DE 201 00 158 U1 hingewiesen wird.

Zudem wurden in der Vergangenheit mannigfaltige Sicherheitsmerkmale entwickelt, um eine Fälschung von Sicherheitsdokumenten zu erschweren. Die Auswahl und Qualität der in einem besonderen Anwendungsfall zweckmäßigen Sicherheitsmerkmale ergibt sich für den Fachmann aus einschlägigen Standards, multinationalen Vereinbarungen oder angemessener eigener Abwägung. Insbesondere bekannt sind die Gravur oder anderweitig feinstrukturierte Veränderung der oberflächlichen Kunststofffolien und das von außen sichtbare Einbringen von holographischen Bildern in das Innere des Laminats. Möglichkeiten zur Verwirklichung sind aus den Druckschriften DE 10 2012 108 200 A1 und DE 10 2010 014 866 A1 bekannt, auf die auch wegen der weiteren Einzelheiten verwiesen wird.

Die zuvor beschriebenen und andere vergleichbare Sicherheitsmerkmale werden bei Bedarf zur weiteren Verbesserung der Sicherheit zusätzlich individualisiert, indem darin eine wahrnehmbare Wiedergabe von inhaberbezogenen Angaben ange legt wird. Soweit es sich dabei um mit bloßem Auge erkennbare Wiedergaben handelt, bietet sich an dieser Stelle besonders die Portraitansicht an. Damit kann der Umstand ausgenutzt werden, dass die menschlichen kognitiven Fähigkeiten hinsichtlich der Erkennung und Wiedererkennung von Gesichtsdarstellungen weit entwickelt sind und somit ein sehr zuverlässiges Kriterium für eine Echtheitsprüfung ohne technische Hilfsmittel liefern können. Auch geringfügige Abweichungen zwischen zwei Wiedergaben der Portraitansichten fallen dementsprechend schon bei ausreichend gründlicher Betrachtung mit bloßem Auge auf.

Aus diesem Grund enthalten viele Sicherheitsdokumente nach dem neuesten Stand der Technik nicht nur das Lichtbild als eine fotografisch-realistische Wiedergabe der Portraitansicht des Inhabers, sondern noch weitere, in Sicherheitsmerkmale integrierte Wiedergaben derselben Portraitansicht. Wegen der Einzelheiten wird auf die Informationsbroschüren der Bundesdruckerei GmbH zum Sicherheitsmerkmal "Identigram®" und zum "Elektronischen Aufenthaltstitel" verwiesen, die online über https://www.bundesdruckerei.de/sites/default/files/identigramr flyer.pdf bzw. https://www.bundesdruckerei.de/sites/default/files/der elektronische aufenthaltstitel .pdf zur Verfügung stehen.

In den meisten Sicherheitsmerkmalen kann die Wiedergabe der Portraitansicht wegen technischer Beschränkungen nicht mit dem Farb-, Kontrast- oder Helligkeitsumfang einer Fotografie angelegt werden. Dementsprechend erscheint die Wiedergabe der Portraitansicht in dem Sicherheitsmerkmal mehr oder weniger verfremdet. Deshalb wird es häufig für erforderlich oder zumindest zweckmäßig erachtet, die ursprüngliche digital codierte Darstellung der Portraitansicht auch für jede einzelne Wiedergabe in einem Sicherheitsmerkmal in Bezug auf Kontrast und Helligkeit anzupassen. Dieses gilt insbesondere, wenn verschiedene Einbringungsverfahren verwendet werden.

### Zusammenfassung der Erfindung

Mit den aus dem Stand der Technik verfügbaren Herstellverfahren und Herstellvorrichtungen für Sicherheitsdokumente entsteht ein beträchtlicher Aufwand bei der Anpassung und Umrechnung der digitalen Darstellung der Portraitansicht für die unterschiedlichen Wiedergaben. Dieser Aufwand kann in bestimmten Situationen die Verarbeitungsgeschwindigkeit limitieren.

Eine Verbesserung ergibt sich insofern durch das Verfahren zum Herstellen von Sicherheitsdokumenten mit jeweils einer individuellen Portraitansicht in unterschiedlichen Wiedergaben gemäß Anspruch 1, durch die Vorrichtung zum Herstellen einer Anzahl von Sicherheitsdokumenten mit jeweils einer individuellen Portraitansicht in unterschiedlichen Wiedergaben gemäß Anspruch 14 sowie die maschinenlesbare Darstellung eines Computerprogramms gemäß Anspruch 15. Vorteilhafte Ausgestaltungen und Weiterbildungen dieser grundlegenden Lösungen sind in den jeweils abhängigen Unteransprüchen angegeben.

Grundlegend vorgeschlagenen wird ein Verfahren zum Herstellen von Sicherheitsdokumenten mit jeweils einer individuellen Portraitansicht in unterschiedlichen Wiedergaben mit Durchführungsabschnitten zum Bereitstellen digital codierter Darstellungen zu den individuellen Portraitansichten, zum Festlegen jeweils eines Bildausschnitts innerhalb der visuellen Wiedergaben auf den Sicherheitsdokumenten, zum Ermitteln statistischer Merkmale der Tonwertverteilung für die digital codierten Darstellungen in Bezug auf den jeweils festgelegten Bildausschnitt, zum Anpassen der Tonwerte innerhalb des jeweils festgelegten Bildausschnitts, insbesondere zum monotonen Anpassen, Spreizen, Verdichten, Skalieren und/oder Limitieren der Tonwerte, in den digital codierten Darstellungen in Abhängigkeit von den ermittelten statistischen Merkmalen in Bezug auf jede der visuellen Wiedergaben gemäß der damit erzielbaren Dynamik, Helligkeits- und/oder Farbauflösung und zum Anlegen der visuellen Wiedergaben während der Herstellung und/oder Personalisierung der Sicherheitsdokumente entsprechend den jeweils tonwert-skalierten digital codierten Darstellungen.

Die vorangehend in Bezug genommenen "Sicherheitsdokumente" umfassen jegliches Dokument, das aufgrund einer Ausrüstung mit Merkmalen für die menschliche visuelle und/oder haptische Erfassung über Eigenschaften verfügt, die einer Fälschung oder Nachbildung technische Erschwernisse entgegen stellen. Beispielhafte Realisierungen von Sicherheitsdokumenten sind Reisepässe, Personalausweise, Aufenthaltstitel, Visa, Führerscheine, ID-Karten, Kundenkarten, Eintrittskarten und persönliche Gutscheine, Kreditkarten, Bankkarten, Barzahlungskarte.

Die vorangehend in Bezug genommenen "statistischen Merkmale" der Tonwertverteilung sind im weitesten Sinne zu verstehen und umfassen insbesondere die Bestimmung des Minimums, des Maximums, des gewichteten Durchschnittswerts und/oder der Varianz der Tonwerte sowie die gewichtete Auswahl von Einzelwerten in dem jeweils bestimmten Bildausschnitt.

Ein Vorteil des grundlegenden Verfahrens kann in bestimmten Situationen darin gesehen werden, dass nicht nur die Menge der für die Tonwertanpassung zu verarbeitenden Daten verringert wird, sondern zugleich der verbleibende Aufwand für den besten Nutzen über die verschiedenen Wiedergaben aufgeteilt wird.

Die erste Alternative einer dazu vorgeschlagenen Ausgestaltung, worin die Tonwerte der digital codierten Darstellungen außerhalb des jeweils festgelegten Bildausschnitts identisch skaliert und/oder auf dieselben Grenzen limitiert werden, zielt auf einen besonders einfachen Algorithmus, der mit den typischen zulässigen Bildhintergrundgestaltungen für Portraitfotos in amtlichen Dokumenten verwendbar ist.

Die zweite Alternative dieser Ausgestaltung, worin die Tonwerte der digital codierten Darstellungen in einem Bereich außerhalb des jeweils festgelegten Bildausschnitts nicht verändert werden, zielt auf eine noch weitergehende Vereinfachung, die insbesondere für Schwarzweißbilder mit einem Hintergrund in mittlerem Grauwert mit zufriedenstellendem Resultat einsetzbar sein kann.

Als weitere eigenständige Ausgestaltung wird vorgeschlagen, dass die Skalierung der Tonwerte der digital codierten Darstellungen zwischen dem festgelegten Bildausschnitt und dem außerhalb davon liegenden Bereich glatt übergeht, um Artefakte in der Wiedergabe zu vermeiden. Damit kann fallweise vorteilhaft dem Auftreten eines erkennbaren Maskierungsartefakts begegnet werden.

Als weitere eigenständige Ausgestaltung wird vorgeschlagen, dass die statistischen Merkmale der Tonwertverteilung signifikante Maximal- und Minimaltonwerte umfassen. Diese signifikanten Maximal- und Minimaltonwerte können insbesondere aus einem vorangehend erstellten Histogramm der Tonwerte ermittelt werden.

Als weitere eigenständige oder zusätzliche Ausgestaltung wird vorgeschlagen, dass der Bildausschnitt für alle Sicherheitsdokumente identisch und insbesondere auf ein zentriertes durchschnittliches Gesichtsoval festgelegt wird.

Das Festlegen des Bildausschnitts auf ein zentriertes durchschnittliches Gesichtsoval kann in bestimmten Situationen als vorteilhaft angesehen werden. Insbesondere kann dadurch unter Umständen eine Vorgabe hinsichtlich der Bildaufteilung unmittelbar zur Vereinfachung des Verfahrens ausgenutzt werden. Derartige Vorgaben sind unter anderem in Bezug auf die Lichtbilder in amtlichen Reise- und Identitätsdokumenten bekannt.

Als weitere eigenständige oder zusätzliche Ausgestaltung wird vorgeschlagen, dass der Bildausschnitt die Augenpartie oder zwei separate Augenflächen in einem zentrierten durchschnittlichen Gesichtsoval ausspart.

In bestimmten Situationen kann das Aussparen der Augenpartie als vorteilhaft angesehen werden. Oftmals treten in der Augenpartie Reflexionen auf, die zu besonders hohen Helligkeitswerten in den Bilddaten führen. Diese hohen Helligkeitswerte können je nach Größe des Reflexes auf der Bildfläche und bei entsprechender Definition des statistischen Merkmals darin eine Berücksichtigung finden. Dann kann mitunter eine unerwünschte Begrenzung für eine Spreizung der Tonwerte zur Kontrastverbesserung resultieren.

Als weitere eigenständige oder zusätzliche Ausgestaltung wird vorgeschlagen, dass der Bildausschnitt für alle Wiedergaben identisch festgelegt wird.

Als weitere eigenständige oder zusätzliche Ausgestaltung wird vorgeschlagen, dass die Wiedergaben für jedes Sicherheitsdokument ein holografisches Bild umfassen und insbesondere ein holografisches Bild in Form eines holografischen Sicherheitsmerkmals, welches eine holographische Portraitansicht, eine maschinenlesbare Zone (MRZ) und zumindest ein Element, insbesondere ein hoheitliches Wappen, eine kinematische Struktur, einen Makrodruck, einen Mikrodruck oder eine maschinell prüfbare Struktur, umfasst, das bei allen Sicherheitsdokumenten gleich ist.

Eine maschinenlesbare Zone (Machine Readable Zone/MRZ) umfasst eine Reihe von Informationen aus der Sichtzone des Sicherheitsdokuments in Form einer mehrzeiligen Abfolge alphanumerischer Zeichen und des Symbols "<". Bei dem mindestens einen Element, das für alle Sicherheitsdokumente gleich ist kann es sich beispielsweise um ein hoheitliche Wappen, eine kinematische Struktur, einen Makrodruck, einen Mikrodruck oder eine maschinell prüfbare Struktur handeln. Eine kinematische Struktur ist eine Struktur, die sich unter verschieden Betrachtungswinkeln durch Verkippen der Ausweiskarte von einer ersten Strukturdarstellung in eine zweite Strukturdarstellung übergeht, wobei die erste und zweite Strukturdarstellung voneinander verschiedene Motive aufweisen oder zumindest teilweise gleiche Motive, deren Darstellungsformen, beispielsweise deren Größen, sich voneinander unterscheidet. Ein Mikrodruck ist eine aus kleinen, mit dem bloßen Auge kaum erkennbaren Buchstaben oder Zahlen zusammengesetzte Linie oder ein entsprechendes Motiv. Eine maschinell prüfbare Struktur ist eine Struktur, die neben der Sichtkontrolle auch eine maschinelle Echtheitsprüfung des Ausweises ermöglicht, wobei diese Struktur keine personenbezogenen oder dokumentenspezifischen Daten beinhaltet.

Bei dem holografischen Sicherheitsmerkmal handelt es sich insbesondere um ein Identigram®. Unter einem Identigram® im Sinne der vorliegenden Erfindung wird ein holografisches Sicherheitsmerkmal gemäß dem eingangs zitierten Informationsblatt "DAS IDENTIGRAM® - EIN NEUES SICHERHEITSMERKMAL FÜR PÄSSE UND PERSONALAUSWEISE" (Bundesdruckerei GmbH 2005, https://www.bundesdruckerei.de/sites/default/files/identigramr flyer.pdf) verstanden, welches folgende Teile der Pass- oder Ausweiskarte holografisch wiedergibt:
- den Bundesadler in dreidimensionaler Darstellung,
- das Lichtbild der Dokumenteninhaberin/des Dokumenteninhabers in stilisierter Form,
- die maschinenlesbaren Zeilen.

Darüber hinaus beinhaltet das Identigram® Bewegungsstrukturen, die über dem herkömmlichen Lichtbild angebracht sind. Hierbei handelt es sich um kinematische Strukturen, die je nach Betrachtungswinkel unterschiedliche Darstellungen zeigen.

Das Identigram® enthält zudem eine maschinell prüfbare Struktur, die neben dem maschinellen Lesen der Ausweise zur Unterstützung der Sichtkontrolle auch eine maschinelle Echtheitsprüfung ermöglicht. Diese Struktur beinhaltet keine personen- oder dokumentenbezogenen Daten.

Als weitere eigenständige oder zusätzliche Ausgestaltung wird vorgeschlagen, dass die Wiedergaben für jedes Sicherheitsdokument einen Tintenstrahldruck umfassen.

Als weitere eigenständige oder zusätzliche Ausgestaltung wird vorgeschlagen, dass die Wiedergaben für jedes Sicherheitsdokument einen Fluoreszenzdruck und/oder einen Phosphoreszenzdruck umfassen.

Als weitere eigenständige oder zusätzliche Ausgestaltung wird vorgeschlagen, dass die Wiedergaben für jedes Sicherheitsdokument eine Lasergravur umfassen.

Als weitere eigenständige oder zusätzliche Ausgestaltung wird vorgeschlagen, dass weiterhin während der Herstellung oder Personalisierung der Sicherheitsdokumente ein darin jeweils enthaltener digitaler maschinenlesbarer Speicher mit einer digital codierten Darstellung der jeweiligen Portraitansicht in den ursprünglichen Tonwerten beschreiben wird. In Anwendungsfällen kann es vorteilhaft sein, die unveränderte digitale Darstellung des Portraitfotos zu einem späteren Zeitpunkt aus dem Speicher des Sicherheitsdokuments entnehmen zu können.

Als weitere eigenständige oder zusätzliche Ausgestaltung wird vorgeschlagen, dass die Sicherheitsdokumente während der Herstellung mit den elektrischen Funktionseinheiten eines Transponders und/oder einer kontaktlosen Smartcard und insbesondere einem RFID-Chip ausgerüstet werden.

Als weitere eigenständige oder zusätzliche Ausgestaltung wird vorgeschlagen, dass der Abschnitt der Bereitstellung der digital codierten Darstellungen der individuellen Portraitansichten weiterhin eine Bewertung der Qualität der Portraitansichten und eine Auswahl nach einem Mindestkriterium umfasst. Dadurch kann in bestimmten Anwendungsfällen vorteilhaft eine maschinelle Auswahl die Inaugenscheinnahme ersetzen.

Als weitere eigenständige oder zusätzliche Ausgestaltung wird vorgeschlagen, dass das Mindestkriterium mehrere notwendige Einzelbedingungen umfasst, von denen wenigstens eine mehrere Qualitätsaspekte kumulativ einbezieht.
Als weitere eigenständige oder zusätzliche Ausgestaltung wird vorgeschlagen, dass eine Anzahl der Einzelbedingungen und/oder der kumulativen Qualitätsaspekte mit den statistischen Merkmalen der Tonwertverteilung übereinstimmen.

Als weitere eigenständige oder zusätzliche Ausgestaltung wird vorgeschlagen, dass ein Teil der hierin aufgezählten Maßnahmen für die gesamte Anzahl von Sicherheitsdokumenten blockweise ausgeführt wird.

Als weitere eigenständige oder zusätzliche Ausgestaltung wird vorgeschlagen, dass ein Teil der hierin aufgezählten Maßnahmen für einzelne oder einen Bruchteil der Sicherheitsdokumente ineinander verschränkt ausgeführt wird.

Weiterhin grundsätzlich vorgeschlagenen wird eine Vorrichtung zum Herstellen einer Anzahl von Sicherheitsdokumenten mit jeweils einer individuellen Portraitansicht in unterschiedlichen Wiedergaben, wobei die Vorrichtung eine Datenverarbeitungsanlage und eine damit ansteuerbare Druckeinrichtung umfasst und zur Durchführung eines der vorangehend festgelegten Verfahren eingerichtet ist.

Als eigenständige Ausgestaltung wird dazu vorgeschlagen, dass die Datenverarbeitungsanlage dazu eingerichtet ist, zur Bereitstellung der digital codierter Darstellungen zu den individuellen Portraitansichten verschlüsselte Datensätze aus einem Pufferspeicher zu lesen und in einer hinsichtlich unberechtigtem Zugang oder Manipulation kontrollierten Produktionsumgebung mit einem geheimen Schlüssel zu entschlüsseln.

Als noch weitere eigenständige oder zusätzliche Ausgestaltung wird vorgeschlagen, dass die Datenverarbeitungsanlage dazu eingerichtet ist, bei Erkennung eines unberechtigten Zugangs oder eines Manipulationsversuchs den geheimen Schlüssel zu löschen.

Schließlich grundsätzlich vorgeschlagenen wird eine maschinenlesbare Darstellung eines Computerprogramms durch dessen Ausführung eine Datenverarbeitungsanlage und ein damit ansteuerbarerer Druckeinrichtung gemäß einem der vorangehend festgelegten Verfahren betreibbar sind.

### Figuren

Eine bevorzugte Durchführungsform des Herstellverfahrens für ein Sicherheitsdokument und eine bevorzugte Ausführungsform einer dazu geeigneten Vorrichtung werden nachfolgend exemplarisch dargestellt. Dazu wird insbesondere auf die anhängenden schematischen Zeichnungen Bezug genommen. Darin zeigen:
Fig. 1 ein veranschaulichendes Blockdiagramm eines exemplarischen Verfahrens; und
Fig. 2 eine veranschaulichende Sequenz der Bildverarbeitung in dem exemplarischen Verfahren; und
Fig. 3 eine veranschaulichende Darstellung einer Vorrichtung zur Durchführung des exemplarischen Verfahrens gemäß den Fig. 1 und 2.

### Beschreibung der Ausführungsformen

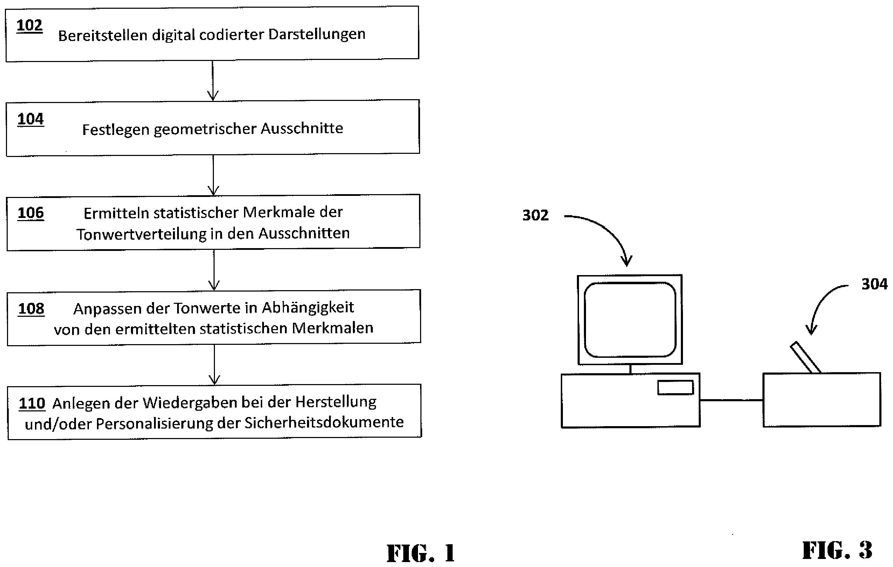

Eine bevorzugte exemplarische Durchführungsform eines Verfahrens zum Herstellen von Sicherheitsdokumenten mit jeweils einer individuellen Portraitansicht in unterschiedlichen Wiedergaben umfasst gemäß Fig. 1 fünf grundlegende Schritte, die nachfolgend als Durchführungsabschnitte in Bezug genommen werden. Jeder dieser Durchführungsabschnitte kann sich auf eines oder mehrere Sicherheitsdokumente beziehen. Dementsprechend kann eine vorgegebene Anzahl von Sicherheitsdokumenten nicht nur durch mehrfache Ausführung des exemplarisch dargestellten Verfahrens erhalten werden, sondern auch durch die blockweise Zusammenfassung der Maßnahmen in Bezug auf mehrere Sicherheitsdokumente in den einzelnen Durchführungsabschnitten.

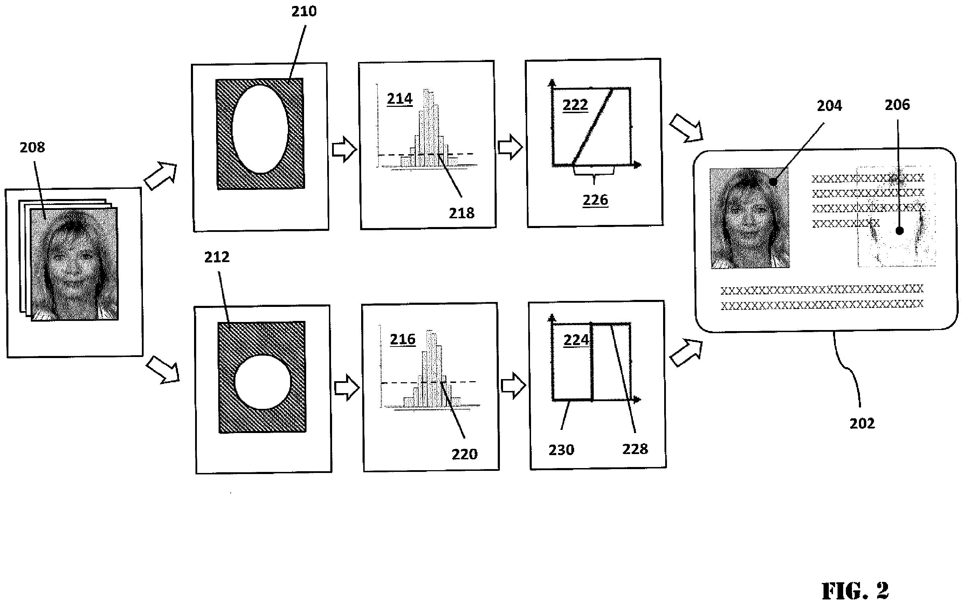

Zur Erläuterung der exemplarischen Durchführungsform des Verfahrens wird gemäß Fig. 2 beispielhaft von laminierten Sicherheitsdokumenten 202 ausgegangen, die in an sich bekannter Art einen Schichtverbund aus Schutzfolien und einem dazwischen eingeschlossenen dauerhaft bedruckten Flächensubstrat aus Papier oder einem ähnlichen bedruckbaren Material umfasst. Typisch sind die Schutzfolien vollständig transparent und das dazwischen liegende Flächensubstrat ist beidseitig in Bezug auf den Inhaber des jeweiligen Sicherheitsdokuments personalisiert. Diese Personalisierung umfasst insbesondere das Lichtbild 204 des Inhabers, das beispielsweise in allen amtlichen Sicherheitsdokumenten als detailgetreue fotografische Reproduktion der Portraitansicht neben den gleichfalls in der Personalisierung enthaltenen persönlichen Daten die verbindliche Grundlage bei der Überprüfung der rechtmäßigen Verwendung des jeweiligen Sicherheitsdokuments bildet. Eine zweite Wiedergabe der Portraitansicht ist in der exemplarischen Situation nach der Herstellung des Schichtverbunds jeweils in einem oberflächlichen Sicherheitsmerkmal 206 angelegt. Dieses oberflächliche Sicherheitsmerkmal 206 ist als sichtbare und tastbare Prägung oder Gravur der Schutzfolien verwirklicht und dient nicht zur Überprüfung der rechtmäßigen Verwendung des Sicherheitsdokuments, sondern zielt vielmehr auf die Erschwerung einer Fälschung oder Nachahmung.

In einem ersten Durchführungsabschnitt 102 des exemplarischen Verfahrens werden digital codierte Darstellungen 208 zu individuellen Portraitansichten bereitgestellt. Typisch werden diese digital codierten Darstellungen 208 aus fotografischen Portraitaufnahmen von Personen gewonnen. Dies kann direkt durch Digitalfotografie oder indirekt durch das Digitalisieren eines Abzugs einer konventionellen fotografischen Wiedergabe der Portraitansicht der Person erfolgen. Die digital codierten Darstellungen 208 bilden in der exemplarischen Situation gleichermaßen die Grundlage für das Lichtbild und die Individualisierung des gravierten oberflächlichen Sicherheitsmerkmals in den Sicherheitsdokumenten 202. In der exemplarischen Situation wird zur Vereinfachung von Rasterbilddaten ausgegangen, die einen besonders einfachen Zugriff auf die Tonwertinformation in einem bestimmten Bildpunkt erlauben.

In einem weiteren Durchführungsabschnitt 104 des exemplarischen Verfahrens wird jeweils ein Bildausschnitt innerhalb der jeweiligen Wiedergabe der Portraitansicht auf den Sicherheitsdokumenten 202 festgelegt. Dieser enthält vereinfachend gesprochen der für eine nachfolgende Tonwertanpassung relevante Teil der jeweiligen Wiedergabe. Der Bildausschnitt könnte im einfachsten Fall für alle Sicherheitsdokumente und für alle Wiedergaben identisch festgelegt werden. Es wird regelmäßig jedoch zu bevorzugen sein, den Bildausschnitt wenigstens in Bezug auf die Wiedergaben anzupassen. Der Grund dafür kann darin gesehen werden, dass die zur Anwendung vorgesehenen unterschiedlichen Wiedergaben in jeweils ganz anderen Bereichen der Porträtansichten gute Ergebnisse liefern.

So kann in der exemplarischen Situation kann die in der Gravur oder Prägung des Sicherheitsmerkmals 206 verfremdete Wiedergabe im Bereich der Haare und der Haut häufig keine gute Zeichnung liefern. Insofern erscheint es angemessen, sich in Bezug auf diese Wiedergabe einen Bildausschnitt 210 im Bereich der Augen, Nase und Mund zu wählen, um die dort vorhandenen Konturen optimal zu nutzen. Hingegen kann in der exemplarischen Situation die Wiedergabe als Lichtbild 204 durch einen Farbdruck im Bereich des gesamten individuellen Inhalts der Portraitansicht gute Ergebnisse liefern. Insofern erscheint es angemessen, in Bezug auf diese Wiedergabe 204 zur Festlegung des statistischen Merkmals einen Bildausschnitt 212 mit möglichst vollständiger Überdeckung des Gesichts zu wählen. Weiterhin wird in der exemplarischen Situation von einer sehr genau spezifizierten Bildaufteilung in den digital codierten Darstellungen 208 ausgegangen, wie sie beispielsweise aus den Vorgaben zu den amtlichen Reisedokumenten bekannt ist. Dementsprechend können die zuvor erwähnten Bildausschnitte 210, 212 zur Vereinfachung des Verfahrens für sämtliche Sicherheitsdokumente 202 identisch gewählt werden. Insbesondere kann der Bildausschnitt 212 für das Lichtbild 204 als zentriertes durchschnittliches Gesichtsoval festgelegt werden.

In einem weiteren Durchführungsabschnitt 106 des exemplarischen Verfahrens werden in Bezug auf den jeweils festgelegten Bildausschnitt 210, 212 statistische Merkmale der Tonwertverteilung in den digital codierten Darstellungen 208 ermittelt. Die Einschränkung in Bezug auf den festgelegten Bildausschnitt 210, 212 kann dabei in einer einfachen Realisierung dadurch erreicht werden, dass für die Ermittlung des statistischen Merkmals die Tonwertverteilung nur für den Teil der Bildpunkte innerhalb des jeweils festgelegten Bildausschnitts 210, 212 berücksichtigt wird. Dies entspricht einem Maskieren der Portraitansichten auf den jeweils festgelegten Bildausschnitt 210, 212 vor dem Ermitteln der statistischen Merkmale.

Bei den statistischen Merkmalen könnte es sich im einfachsten Fall um die Maximal- und Minimalwerte des Tonwertumfangs in dem jeweils zuvor festgelegten Bildausschnitt 210, 212 handeln. Regelmäßig erscheint dies jedoch nicht zweckmäßig, weil dadurch ein für die menschliche Wahrnehmung der Wiedergabe belangloser Bildpunkt oder Bildbereich mit einem Extremwert eine zu große Bedeutung erhalten könnte. Insofern sollten vorzugsweise zumindest signifikante Maximal- und Minimalwerte bestimmt werden, die auf einer hinreichend großen Anzahl von Bildpunkten angenommen oder überschritten werden. Zu deren Ermittlung wird in der exemplarischen Situation zunächst für jede Wiedergabe eine Tonwertkurve oder in anderer Bezeichnung ein Histogramm 214, 216 erzeugt, das für alle in der Codierung der Darstellung vorgesehenen Tonwerte die Häufigkeit des Auftretens in den Bildpunkten des jeweiligen Bildausschnitts 210, 212 angibt. Durch die Beschränkung auf die jeweils zuvor unterschiedlich festgelegten Bildausschnitte 210, 212 ergeben sich für die zwei exemplarisch betrachteten Wiedergaben regelmäßig unterschiedliche Histogramme 214, 216.

In einem weiteren Durchführungsabschnitt 108 des exemplarischen Verfahrens werden die Tonwerte in den digital codierten Darstellungen 208 der Portraitansichten innerhalb des jeweils festgelegten Bildausschnitts 210, 212 in Abhängigkeit von den vorangehend jeweils ermittelten statistischen Merkmalen 214, 216 in Bezug auf jede der Wiedergaben gemäß der damit erzielbaren Dynamik, Helligkeits- und/oder Farbauflösung angepasst. In der exemplarischen Situation wird für jedes Sicherheitsdokument 202 für jede der zwei vorgesehenen Wiedergaben 204, 206 eine solche Anpassung durchgeführt. Die Anpassung für die Wiedergabe als Lichtbild 204 im Farbdruck wird beispielsweise derart ausgeführt, dass sich eine kontrastreiche Darstellung ergibt, die den mit dem Druckverfahren erzielbaren Farb-, Helligkeits- und/oder Kontrastumfang besser ausnutzt, als dies bei unveränderter Verwendung der digital codierten Darstellung 208 der Fall wäre. Beispielsweise kann auf die vorangehend erzeugten Histogramme 214, 216 in an sich bekannter Weise eine Signifikanzschwelle 218, 220 angewendet werden, um einen relevanten Bereich der darin verzeichneten Tonwerte zu bestimmen. Auf diese Art können vorteilhaft kleine Bildbereiche mit extremen Tonwerten aus der Betrachtung ausgeschlossen werden.

Dabei werden ausgehend vom signifikanten maximalen und minimalen Tonwert alle Bildpunkte zu den angrenzenden Tonwertvorkommen, deren summierte Häufigkeit die Signifikanzschwelle 218, 220 noch nicht erreicht, auf den signifikanten maximalen bzw. minimalen Tonwert gesetzt. Die dadurch entstehenden Ränder in der Tonwertverteilung können zum Spreizen der Tonwertverteilungen im verbleibenden Bereich genutzt werden. Dies kann in bestimmten Situationen helfen, die Zeichnung in kontrastarmen Partien der Portraitansicht zu verbessern. Eine derartige Verbesserung kann insbesondere für das Lichtbild 204 zweckmäßig sein.

Die Anpassung der Tonwerte wird in den praktisch relevanten Anwendungsfällen monoton sein und die Anordnung der Bildpunkte in einer Vergleichsrelation nach Helligkeit und/oder Farbsättigung nicht verändern. In Bezug auf die Helligkeitswerte kann die mit der Tonwertanpassung bewirkte Transformation durch die schematisch angedeuteten Korrekturfunktionen 222, 224 beschrieben werden. In der ersten Korrekturfunktion 222 für die Wiedergabe als Lichtbild 204 wird der auf der Abszisse im markierten Intervall 226 liegende Helligkeitsumfang auf den gesamten mit dem gewählten Druckverfahren erzielbaren Helligkeitsumfang abgebildet, der auf der Ordinate aufgetragen ist. In der zweiten Korrekturfunktion 224 für die Wiedergabe der Portraitansicht in der Gravur des Sicherheitsmerkmals 206 wird im exemplarischen Fall der Helligkeitsumfang auf lediglich zwei mit dem exemplarischen Gravurverfahren erzielbare Helligkeitswerte 228, 230 reduziert.

Die beschriebene Anpassung der Tonwerte wird in jedem Fall für die Bildpunkte in den zuvor jeweils festgelegten Bildausschnitt 210, 212 durchgeführt. In der exemplarischen Situation wird die Anpassung der Tonwerte für die übrigen Bildpunkte in gleicher Weise durchgeführt, um sichtbare Artefakte im Übergang zu vermeiden. In einem weiteren Durchführungsabschnitt 110 des exemplarischen Verfahrens werden innerhalb der der Herstellung oder Personalisierung der Sicherheitsdokumente 202 die vorgesehenen Wiedergaben 204, 206 der jeweiligen individuellen Portraitansichten mit der jeweils vorangehend bestimmten Anpassung der Tonwerte angelegt.

In der exemplarischen Situation wird jeweils vor der Herstellung des Schichtverbunds die erste Wiedergabe der Portraitansicht als Lichtbild 204 als Farbdruck auf dem Flächensubstrat angebracht. Der Farbdruck wird in an sich bekannter Weise als Tintenstrahldruck ausgeführt, um dessen vergleichsweise brillante und dauerhafte Farbdarstellung zu nutzen. Die zweite Wiedergabe der Portraitansicht wird jeweils nach der Herstellung des Schichtverbunds in dem oberflächlichen Sicherheitsmerkmal 206 durch ein an sich bekanntes Gravurverfahren angelegt.

Das vorangehend erläuterte exemplarische Verfahren kann auf einer typischen Herstellanlage für Sicherheitsdokumente durchgeführt werden. Insbesondere kann eine solche Anlage gemäß Fig. 3 eine Datenverarbeitungsanlage 302 und ein damit ansteuerbare Druckeinrichtung 304 umfassen. Die Druckeinrichtung ist vorzugsweise zum Anlegen sämtlicher Wiedergaben der Portraitansicht eingerichtet und ansteuerbar. In dieser Situation werden vorteilhaft die Durchführungsabschnitte 102, 104, 106 und 108 ausschließlich von der Datenverarbeitungsanlage 302 ausgeführt. Im Durchführungsabschnitt 110 wird die Druckeinrichtung 304 durch die Datenverarbeitungsanlage 302 zur Herstellung oder Personalisierung der Sicherheitsdokumente angesteuert.

Die Eignung der Anlage für das exemplarische Verfahren kann sich dabei aus einer darin enthaltenen maschinenlesbaren Darstellung eines Computerprogramms ergeben. Mithin kann es in bestimmten Situationen möglich sein, eine zuvor für ein konventionelles Herstellverfahren genutzte Vorrichtung durch eine Änderung eines darin enthaltenen Computerprogramms die Eignung für die Durchführung des exemplarischen Verfahrens zu vermitteln.

Die Ablaufpläne und die Blockschaubilder in den vorangehend erläuterten Figuren veranschaulichen die Struktur, die Funktionalität und die Funktionsweise möglicher Ausführungsarten von Verfahren, Vorrichtungen und Computerprogrammprodukten gemäß verschiedenen Ausführungsformen der vorliegenden Erfindung. Diesbezüglich kann jeder Block in dem Ablaufplan oder in den Blockschaubildern ein Modul, ein Segment oder ein Teil eines Codes veranschaulichen, der eine oder mehrere ausführbare Anweisungen zum Umsetzen der angegebenen Funktion(en) umfasst. Zu beachten ist auch, dass bei einigen alternativen Ausführungsarten die in dem Block angegebenen Funktionen in einer von den Figuren abweichenden Reihenfolge ausgeführt werden können. Zum Beispiel können zwei nacheinander dargestellte Blöcke tatsächlich im Wesentlichen gleichzeitig ausgeführt werden, oder die Blöcke können je nach gewünschter Funktionalität manchmal in umgekehrter Reihenfolge ausgeführt werden. Ferner wird darauf hingewiesen, dass jeder Block der Blockschaubilder und/oder des dargestellten Ablaufplans und Kombinationen von Blöcken in den Blockschaubildern und/oder dem dargestellten Ablaufplan durch spezialisierte Hardwaresysteme, die die angegebenen Funktionen oder Aktionen oder Kombinationen ausführen, oder durch Kombinationen von spezialisierter Hardware und Computeranweisungen umgesetzt werden kann.

### Bezugszeichenliste

- 102-110: Verfahrensschritte
- 202: Sicherheitsdokument
- 204: Lichtbild
- 206: Gravur als Sicherheitsmerkmal
- 208: Digital codierte Darstellung zu Portraitansicht
- 210,212: Ausschnitte
- 214, 216: Histogramme
- 218,220: Signifikanzschwelle
- 222, 224: Korrekturfunktion
- 226: Intervall
- 228, 230: Helligkeitswerte
- 302: Datenverarbeitungsanlage
- 304: Druckeinrichtung

## Patentansprüche

1. Verfahren zum Herstellen einer Anzahl von Sicherheitsdokumenten (202) mit jeweils einer individuellen Portraitansicht in unterschiedlichen Wiedergaben (204, 206), wobei eine erste Wiedergabe (204) ein Lichtbild und eine zweite Wiedergabe (206) eine Prägung oder Gravur ist, umfassend das:
- Bereitstellen (102) digital codierter Darstellungen (208) zu den individuellen Portraitansichten;
- Festlegen (104) jeweils eines Bildausschnitts (210, 212) innerhalb der Wiedergaben auf den Sicherheitsdokumenten (202), wobei die Bildausschnitte in Bezug auf die Wiedergaben angepasst werden, wobei ein erster in Bezug auf die erste Wiedergabe (204) angepasster Bildausschnitt (210) ein Gesicht der individuellen Portraitansicht vollständig überdeckt, wobei ein zweiter in Bezug auf die zweite Wiedergabe (206) angepasster Bildausschnitt (212) im Bereich von Augen, Nase und Mund der individuellen Portraitansicht gewählt wird;
- Ermitteln (106) statistischer Merkmale (214, 216) der Tonwertverteilung für die digital codierten Darstellungen (208) in Bezug auf den jeweils festgelegten Bildausschnitt (210, 212);
- Anpassen (108) der Tonwerte in den digital codierten Darstellungen (208) innerhalb des jeweils festgelegten Bildausschnitts (210, 212) in Abhängigkeit von den ermittelten statistischen Merkmalen (214, 216) in Bezug auf jede der Wiedergaben (204, 206) gemäß der damit erzielbaren Dynamik, Helligkeits- und/oder Farbauflösung; und
- Anlegen (110) der Wiedergaben (204, 206) während der Herstellung und/oder Personalisierung der Sicherheitsdokumente (202) entsprechend den jeweils tonwert-angepassten digital codierten Darstellungen (208),
worin die Tonwerte der digital codierten Darstellungen (208) außerhalb des jeweils festgelegten Bildausschnitts (210, 212) und innerhalb des festgelegten Bildausschnitts (210, 212) identisch angepasst werden oder
worin die Tonwerte der digital codierten Darstellungen (208) in einem Bereich außerhalb des jeweils festgelegten Bildausschnitts (210, 219) nicht verändert werden.

2. Verfahren nach Anspruch 1, worin die Skalierung der Tonwerte der digital codierten Darstellungen (208) zwischen dem festgelegten Bildausschnitt (210, 212) und dem außerhalb davon liegenden Bereich glatt übergeht, um Artefakte in der Wiedergabe (204, 206) zu vermeiden.

3. Verfahren nach einem der vorangehenden Ansprüche, worin die statistischen Merkmale (214, 216) der Tonwertverteilung signifikante Maximal- und Minimaltonwerte sind.

4. Verfahren nach einem der vorangehenden Ansprüche, worin der Bildausschnitt (210, 212) für alle Sicherheitsdokumente (202) identisch und insbesondere auf ein zentriertes durchschnittliches Gesichtsoval festgelegt wird.

5. Verfahren nach einem der vorangehenden Ansprüche, worin der Bildausschnitt (210, 212) für alle visuellen Wiedergaben (204, 206) identisch festgelegt wird.

6. Verfahren nach einem der vorangehenden Ansprüche, worin die Wiedergaben (204, 206) für jedes Sicherheitsdokument (202) ein holografisches Bild umfassen und insbesondere ein holografisches Bild in Form eines holografischen Sicherheitsmerkmals, welches eine holographische Portraitansicht, eine maschinenlesbare Zone (MRZ) und zumindest ein Element, insbesondere ein hoheitliche Wappen, eine kinematische Struktur, einen Makrodruck, einen Mikrodruck oder eine maschinell prüfbare Struktur, umfasst, das bei allen Sicherheitsdokumenten gleich ist.

7. Verfahren nach einem der vorangehenden Ansprüche, worin die Wiedergaben (204, 206) für jedes Sicherheitsdokument einen Tintenstrahldruck und/oder einen Fluoreszenzdruck und/oder einen Phosphoreszenzdruck umfassen.

8. Verfahren nach einem der vorangehenden Ansprüche, worin die Wiedergaben (206) für jedes Sicherheitsdokument (202) eine Lasergravur umfassen.

9. Verfahren nach einem der vorangehenden Ansprüche, worin die Bereitstellung (102) der digital codierten Darstellungen (208) der individuellen Portraitansichten weiterhin eine Bewertung der Qualität der Portraitansichten und eine Auswahl nach einem Mindestkriterium umfasst.

10. Verfahren nach Anspruch 9, worin das Mindestkriterium mehrere notwendige Einzelbedingungen umfasst, von denen wenigstens eine mehrere Qualitätsaspekte kumulativ einbezieht.

11. Verfahren nach Anspruch 10, worin eine Anzahl der Einzelbedingungen und/oder der kumulativen Qualitätsaspekte mit den statistischen Merkmalen der Tonwertverteilung übereinstimmen.

12. Vorrichtung zum Herstellen einer Anzahl von Sicherheitsdokumenten mit jeweils einer individuellen Portraitansicht in unterschiedlichen Wiedergaben, wobei die Vorrichtung eine Datenverarbeitungsanlage (302) und eine damit ansteuerbare Druckeinrichtung (304) umfasst und zur Durchführung eines Verfahrens nach einem der vorangehenden Ansprüche eingerichtet ist.

13. Computerprogrammprodukt, insbesondere digitales Speichermedium mit digital codierten Instruktionen, durch deren Ausführung eine Datenverarbeitungsanlage (302) und ein damit ansteuerbarerer Druckeinrichtung (304) gemäß einem der Ansprüche 1 bis 11 betreibbar sind.

## Claims

1. A method for producing a number of security documents (202), each including an individual portrait view in different renderings (204, 206), a first rendering (204) being a photograph and a second rendering (206) being an embossing or engraving, comprising the following steps:
- providing (102) digitally encoded representations (208) for the individual portrait views;
- establishing (104) a respective cropping (210, 212) within the renderings on the security documents (202), the croppings being adapted with respect to the renderings, a first cropping (210) that is adapted with respect to the first rendering (204) completely covering a face of the individual portrait view, a second cropping (212) that is adapted with respect to the second rendering (206) being selected in the region of eyes, nose and mouth of the individual portrait view;
- ascertaining (106) statistical features (214, 216) of the tonal value distribution for the digitally encoded representations (208) with respect to the respective established cropping (210, 212);
- adapting (108) the tonal values in the digitally encoded representations (208) within the respective established cropping (210, 212) as a function of the ascertained statistical features (214, 216) with respect to each of the renderings (204, 206) according to the dynamics, brightness resolution and/or color resolution achievable thereby; and
- creating (110) the renderings (204, 206) during the production and/or personalization of the security documents (202) corresponding to the respective tonal value-adapted digitally encoded representations (208),
in which the tonal values of the digitally encoded representations (208) are identically adapted outside the respective established cropping (210, 212) and within the established cropping (210, 212), or
in which the tonal values of the digitally encoded representations (208) are not changed in a region outside the respective established cropping (210, 219).

2. The method according to claim 1, wherein the scaling of the tonal values of the digitally encoded representations (208) transitions smoothly between the established cropping (210, 212) and the region located outside thereof, so as to avoid artefacts in the renderings (204, 206).

3. A method according to any one of the preceding claims, wherein the statistical features (214, 216) of the tonal value distribution are significant maximum and minimum tonal values.

4. A method according to any one of the preceding claims, wherein the cropping (210, 212) is identical for all security documents (202) and, in particular, is established to be a centered average facial oval.

5. A method according to any one of the preceding claims, wherein the cropping (210, 212) is identically established for all visual renderings (204, 206).

6. A method according to any one of the preceding claims, wherein the renderings (204, 206) for each security document (202) comprise a holographic image and, in particular, a holographic image in the form of a holographic security feature, which comprises a holographic portrait view, a machine-readable zone (MRZ) and at least one element, in particular a national coat of arms, a kinematic structure, a macro print, a micro print or a machine-verifiable structure, which is the same in all security documents.

7. A method according to any one of the preceding claims, wherein the renderings (204, 206) for each security document comprise an ink jet print and/or fluorescent print and/or phosphorescent print.

8. A method according to any one of the preceding claims, wherein the renderings (206) for each security document (202) comprise a laser engraving.

9. A method according to any one of the preceding claims, wherein the provision (102) of the digitally encoded representations (208) of the individual portrait views furthermore comprises evaluating the quality of the portrait views and making a selection according to a minimum criterion.

10. The method according to claim 9, wherein the minimum criterion encompasses a plurality of necessary individual conditions, at least one of which cumulatively includes a plurality of quality aspects.

11. The method according to claim 10, wherein a number of the individual conditions and/or of the cumulative quality aspects agree with the statistical features of the tonal value distribution.

12. A device for producing a number of security documents, each including an individual portrait view in different renderings, the device comprising a data processing system (302) and a printing unit (304) activatable thereby, and being configured to carry out a method according to any one of the preceding claims.

13. A computer program product, in particular a digital storage medium including digitally encoded instructions which, when executed, can be used to operate a data processing system (302) and a printing unit (304) activatable thereby according to any one of claims 1 to 11.

## Revendications

1. Procédé de production d'un certain nombre de documents de sécurité (202) avec respectivement une vue de portrait individuelle en différentes reproductions (204, 206), où une première reproduction (204) est une photographie et la deuxième reproduction (206) est une empreinte ou une gravure, comprenant :
- la mise au point (102) de représentations codées numériquement (208) pour les vues de portrait individuelles ;
- la désignation (104) respectivement d'une partie d'image (210, 212) au sein des reproductions sur les documents de sécurité (202), où les parties d'image sont ajustées en fonction des reproductions, où une première partie d'image (210) ajustée en fonction de la première reproduction (204) recouvre totalement un visage de la vue de portrait individuelle, où une deuxième partie d'image (212) ajustée en fonction de la deuxième reproduction (206) est choisie dans la zone des yeux, du nez et de la bouche de la vue de portrait individuelle ;
- la détermination (106) de caractéristiques statistiques (214, 216) de la distribution des valeurs tonales pour les représentations codées numériquement (208) en fonction de la partie d'image (210, 212) désignée ;
- l'ajustement (108) des valeurs tonales dans les représentations codées numériquement (208) au sein de la partie d'image (210, 212) respectivement désignée en relation avec les caractéristiques statistiques (214, 216) déterminées en fonction de chacune des reproductions (204, 206) selon la dynamique, la luminosité et/ou la résolution de la couleur réalisables ; et
- l'application (110) des reproductions (204, 206) pendant la production et/ou la personnalisation du document de sécurité (202) de manière correspondante aux représentations codées numériquement (208) respectivement ajustées en valeurs tonales,
dans lequel les valeurs tonales des représentations codées numériquement (208) sont ajustées de manière identique à l'extérieur de la partie d'image (210, 212) respectivement désignée et à l'intérieur de la partie d'image (210, 212) désignée ou dans lequel les valeurs tonales des représentations codées numériquement (208) ne sont pas modifiées dans une zone à l'extérieur de la partie d'image (210, 212) respectivement désignée.

2. Procédé selon la revendication 1, dans lequel la mise à l'échelle des valeurs tonales des représentations codées numériquement (208) est monotone entre la partie d'image (210, 212) désignée et la zone située en dehors de celle-ci afin d'éviter des artefacts dans la reproduction (204, 206).

3. Procédé selon l'une des revendications précédentes, dans lequel les caractéristiques statistiques (214, 216) de la distribution des valeurs tonales sont des valeurs tonales maximales et minimales significatives.

4. Procédé selon l'une des revendications précédentes, dans lequel la partie d'image (210, 212) est identique pour tous les documents de sécurité (202) et est en particulier fixée sur un ovale du visage moyen centré.

5. Procédé selon l'une des revendications précédentes, dans lequel la partie d'image (210, 212) est fixée de manière identique pour toutes les reproductions (204, 206) visuelles.

6. Procédé selon l'une des revendications précédentes, dans lequel les reproductions (204, 206) comprennent, pour chaque document de sécurité (202), une image holographique et notamment une image holographique sous la forme d'une caractéristique de sécurité holographique, laquelle comprend une vue de portait holographique, une zone lisible par machine (MRZ) et au moins un élément, en particulier un blason régalien, une structure cinématique, une macro impression, une micro impression ou une structure pouvant être vérifiée par machine, qui est identique pour tous les documents de sécurité.

7. Procédé selon l'une des revendications précédentes, dans lequel les reproductions (204, 206) comprennent une impression par jet d'encre et/ou une impression par fluorescence, et/ou une impression par phosphorescence pour chaque document de sécurité.

8. Procédé selon l'une des revendications précédentes, dans lequel les représentations (206) comprennent une gravure par laser pour chaque document de sécurité (202).

9. Procédé selon l'une des revendications précédentes, dans lequel la mise au point (102) des représentations codées numériquement (208) des vues de portait individuelle comprend en outre une évaluation de la qualité des vues de portrait et une sélection selon un critère minimal.

10. Procédé selon la revendication 9, dans lequel le critère minimal comprend plusieurs conditions individuelles nécessaires parmi lesquelles au moins une prend en considération de manière cumulative plusieurs aspects qualitatifs.

11. Procédé selon la revendication 10, dans lequel un certain nombre des conditions individuelles et/ou des aspects qualitatifs cumulatifs correspondent avec les caractéristiques statistiques de la distribution des valeurs tonales.

12. Dispositif de production d'un certain nombre de documents de sécurité avec respectivement une vue de portrait individuelle dans différentes reproductions, où le dispositif comprend une installation de traitement de données (302) et un dispositif d'impression (304) qui peut être activé par celle-ci, et est conçu pour l'exécution d'un procédé selon l'une des revendications précédentes.

13. Produit-programme informatique, notamment support de stockage numérique avec des instructions codées numériquement, par l'exécution desquelles une installation de traitement de données (302) et un dispositif d'impression (304), pouvant être activé par celle-ci, sont mis en fonction selon l'une des revendications 1 à 11.
